# EUROPÄISCHE PATENTSCHRIFT

(11) **EP 2 490 519 B1**
(45) Veröffentlichungstag und Bekanntmachung des Hinweises auf die Patenterteilung: **08.03.2017**
(21) Anmeldenummer: 10779225.1
(22) Anmeldetag: 21.10.2010
(51) Int. Cl.: A01G 3/04, A01G 3/053

(54) **SCHNEIDGERÄT, INSBESONDERE HECKENSCHERE**
CUTTING DEVICE, IN PARTICULAR A HEDGE TRIMMER
APPAREIL DE COUPE, NOTAMMENT TAILLE-HAIES

(30) Priorität: 21.10.2009 DE 202009014274 U
(43) Veröffentlichungstag der Anmeldung: 29.08.2012
(73) Patentinhaber: Hofmann, Johann, 86874 Zaisertshofen (DE)
(72) Erfinder: Hofmann, Johann, 86874 Zaisertshofen (DE)
(74) Vertreter: Fiener, Josef
(86) Internationale Anmeldenummer: PCT/EP2010/006428
(87) Internationale Veröffentlichungsnummer: WO 2011/047854

(56) Entgegenhaltungen:
- DE-A1- 3 902 700
- DE-U1-202004 018 342
- JP-A- 2005 261 275
- US-A- 498 713
- US-A- 1 115 328
- US-A- 4 970 791
- US-B1- 7 603 781

## Beschreibung

Die Erfindung betrifft ein Schneidgerät, insbesondere eine Heckenschere mit den oberbegrifflichen Merkmalen des Anspruches 1.

Für die Gestaltung von Gärten oder Parkanlagen werden oftmals Pflanzen verwendet, die eine spezieile Form aufweisen. In Formschnittverfahren werden hierbei geometrische oder figürliche Gestaltungen der Pflanze erzeugt, die als optische Akzente in formalen Gärten oder zur Strukturierung von Parkanlagen dienen. Um einen entsprechenden Formschnitt an den Pflanzen, zumeist handelt es sich um immer grüne und winterharte Laub und Nadelgehölze wie beispielsweise Eibe, Scheinzypresse, Buchsbaum und Hainbuche wird in Regel auf manuelle Schneidgeräte wie Heckenscheren oder spezielle auch mit Motor oder Akku angetriebene Schneidvorrichtungen, wie beispielsweise Rasenkantenscheren und Kettensägen zurückgegriffen. Während bei kleineren Pflanzen noch eine freihändige Führung der Schneidgeräte möglich ist, ist es bei größeren Pflanzen zum Schneiden gerader Formen unabdingbar, dass hier Hilfsmittel verwendet werden.

Hierzu kommen beispielsweise Messlatten oder Richtschnüre in Frage. Daneben besteht auch die Möglichkeit halbkreisförmige Schablonen zu verwenden, um beispielsweise Kugeln zu schneiden. Problematisch ist jedoch stets die Führung des Gerätes, um eine exakte geometrische Form zu erzeugen und Fehlschnitte zu vermeiden. Um eine verbesserte Führung des Schneidgerätes zu erreichen, zeigt beispielsweise die DE 20 2004 018 342 U1 einen an dem Messerbalken oder dem Schwert einer motorisierten Heckenschere angesetzten Handgriff, über den eine Führung oder Abstützung des Messerbalkens erfolgt. Um bereits eine Vorausrichtung des Schwertes einer Heckenschere durchführen zu können, schlägt die DE 39 02 700 C2 eine schwenkbare Anordnung des Schwertes an dem Antriebsmotor einer Heckenschere vor. Nachteilig an den bekannten Vorrichtungen ist, dass hier stets das Schwert starr in gerader Linie ausgerichtet bleibt. Für den Schnitt von bogenförmigen Figuren oder auch um runde Schnitte mit entsprechenden Radien zu erzeugen, muss vielfach dennoch auf eine Schablone, eine Richtschnur oder Meßlatte zurückgegriffen werden, um die gleichförmige Schnittführung sicherzustellen.

In der JP 2005 261275 A wird ein Schneidgerät gemäss dem Oberbegriff des Anspruchs 1 gezeigt, wobei das Messer und die Messerschiene in Art eines Krummsäbels bogenförmig gekrümmt sind.

Zur Erzielung von Formschnitten werden keine Ausführungen gegeben.

Aufgabe der vorliegenden Erfindung ist es daher, ein Schneidgerät zur Verfügung zu stellen, mit dem auf einfache Weise Formschnitte durchgeführt werden können.

Diese Aufgabe wird gelöst durch ein Schneidgerät mit den Merkmalen des Anspruchs 1 sowie die Verwendung eines derartigen Schneidgeräts gemäß Anspruch 6. Vorteilhafte Weiterbildungen der Erfindung sind Gegenstand der abhängigen Ansprüche.

Das erfindungsgemäße Schneidgerät, weist ein aus einem Gehäuse (mit Antrieb) vorstehendes Schwert oder einen Messerbalken auf, der eine Messerschiene mit mindestens einem an oder in der Messerschiene verschiebbaren Messer umfasst. Als Messer kommen hier auch zwei gegeneinander bewegliche Messer in Frage, die Vorsprünge aufweisen und aufgrund der gegenläufigen Bewegung der Messer ein Abscheren des Pflanzenmaterials bewirken. Dabei ist die Messerschiene und das Messer gegenüber einer geradlinigen Hauptachse bogenförmig gekrümmt. Aufgrund dieser Krümmung besteht die Möglichkeit, einfach geometrische Figuren, wie beispielsweise Kuppeln oder auch kugelförmige Schnitte mit einer vorgegebenen Wölbung in einfacher Weise zu realisieren. Hierzu werden die Messerschiene und das Messer in seitlicher Richtung so weit bogenlinienförmig gekrümmt oder verformt, bis diese den gewünschten Radius aufweisen. Die Heckenschere wird hiernach an der zu schneidenden Pflanze angesetzt und in einer Ebene um die Pflanze herumgeführt. Aufgrund der Wölbung gegenüber der Hauptachse des Schneidgeräte kann ein sauberer, geometrisch exakter Schnitt erfolgen, ohne dass die Schneidvorrichtung bzw. Heckenschere dabei an einer Vielzahl von Punkten der Pflanze angesetzt werden muss, um die geometrische Form abschnittsweise zu erzeugen.

Um die Verformbarkeit des Schwerts bzw. der Messerschiene und des Messers zu gewährleisten, wird es als empfehlenswert angesehen, wenn die Messerschiene und das Messer aus einen biegeweichen, insbesondere elastisch verformbaren Material gebildet sind. Als vorteilhaft erweist sich in diesem Zusammenhang die Verwendung von Federstahl oder einer sogenannten Formgedächtnislegierung. Hierdurch wird gewährleistet, dass das Schwert bzw. die Messerschiene und das Messer nach der Verformung und nach dem Einsatz des Gerätes wieder in die ursprüngliche, geradlinige Ausgangsposition zurückverformt werden kann. Auch erlauben diese Materialien einen sehr großen elastischen Verformungsbereich und damit bogenförmige Wölbungen der Schneidelemente.

Um die bogenförmige Krümmung bzw. Verformung koordiniert durchführen zu können, und um eine reproduzierbare Einstellung der Verformung vornehmen zu können, wird es als vorteilhaft angesehen, wenn am Schneidgerät, insbesondere an der Heckenschere wenigstens eine Verstellvorrichtung vorgesehen ist. Die Verstellvorrichtung kann dabei in günstiger Weise wenigstens einen Aktuator aufweisen, dessen erstes Ende etwa mittig am Schwert bzw. an der Messerschiene bzw. dem Messerbalken angeordnet ist, während das zweite Ende des Aktuators am Gehäuse oder einem Gehäuseelement, beispielsweise einem Handgriff, einer Motorabdeckung, einem Getriebe o. dgl. festgelegt ist. Der Aktuator kann beispielsweise in Form eines Stellzylinders ausgebildet sein. Daneben besteht auch die Möglichkeit, hier einen Spindeltrieb oder eine Teleskopstange zu verwenden, über die eine stufenlose Einstellung der Krümmung bzw. Verformung der Messerschiene und des Messers bzw. des Schwerts in seitlicher Richtung durchgeführt werden kann. Werden mehrere Aktuatoren vorgesehen, so besteht sogar die Möglichkeit hier eine geschwungene, im wesentlich S-förmige Verformung von Messerschiene und Messer durchzuführen, wodurch auch komplexere Formgebungen bzw. Krümmungen realisiert werden können. Die Aktuatoren, wie vorgenannt, können auch eine Messskala oder eine Anzeige für den Grad der Verformung des Messerbalkens aufweisen. Daneben besteht die Möglichkeit, Markierungen für bestimmte Radien, die durch die Verformung der Messerschiene und des Messers erreicht werden sollen, im Aktuator vorzusehen. Neben einer stufenlosen Verstellung der Verformung kann selbstverständlich auch eine stufenweise, gleichbleibende Verstellung durchgeführt werden, sodass der Aktuator hierbei insbesondere Rastpositionen aufweist, auf die dieser eingestellt werden kann. Somit kann ebenfalls eine reproduzierbare, bleibende Verformung der Messerschiene und des Messers gegeben sein.

Neben den genannten Möglichkeiten, den Aktuator auszubilden, besteht auch die Möglichkeit, wenigstens die Messerschiene mit Piezo-Elementen auszustatten. Die Messerschiene weist hierzu beispielsweise mehrere Schlitze oder Unterbrechungen auf, die quer zur Längserstreckung der Messerschiene oder des Schwerts angeordnet sind. In diesen Unterbrechungen oder Nuten sind dann die entsprechenden Piezo-Elemente eingefügt und verbinden die Abschnitte der Messerschiene, die durch die Unterbrechungen gebildet wurden. Durch das Anlegen einer elektrischen Spannung erfolgt dann eine Verformung d.h. Expansion oder Kontraktion der Piezo-Elemente und damit die bogenförmige Verformung bzw. Krümmung der Messerschiene. Bei dieser Ausführungsform der Heckenschere ist eine Spannungsversorgung erforderlich, wobei die bei elektrisch betriebenen Gartengeräten oft schon vorhanden ist. Der Grad der Verformung kann über die Beaufschlagung der Piezoelemente mit elektrischer Energie eingestellt werden, z. B. durch einen entsprechenden Regler oder Schalter am Schneidgerät.

Eine vorteilhafte Ausführungsform der Heckenschere sieht vor, dass der Messerbalken zusätzlich schwenkbar im Gehäuse angelenkt ist. Hierdurch kann bereits eine Vordefinition der Position des Messerbalkens erfolgen, aus der heraus dann eine zusätzliche, bogenlinienförmige Verformung der Messerschiene und des Messers durchgeführt wird. Über diese Ausführungsform der Heckenschere lassen sich dann auch komplexere geometrische Figuren beispielsweise über Kopf, in einer Hecke oder dergleichen realisieren.

Vorteilhafte Weiterbildungen der Erfindung ergeben sich aus der nachfolgenden Beschreibung bevorzugter, jedoch nicht beschränkender Ausführungsformen der Erfindung anhand der schematischen Zeichnungen. Es zeigen jeweils in perspektivischer Darstellung:
- Fig. 1: ein Schneidgerät in Form einer Heckenschere,
- Fig. 2: die Ausführungsform nach Fig. 1 im Einsatz an einer zu schneidenden Pflanze,
- Fig. 3: eine (hier nicht beanspruchte) Führungsvorrichtung, und
- Fig. 4: eine Fotographie einer Heckenschere mit seitlich gekrümmten Messerbalken.

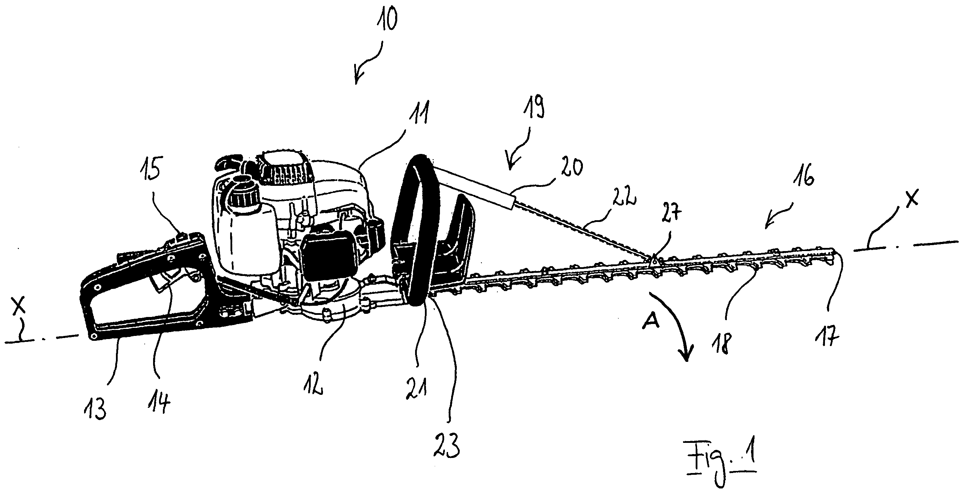

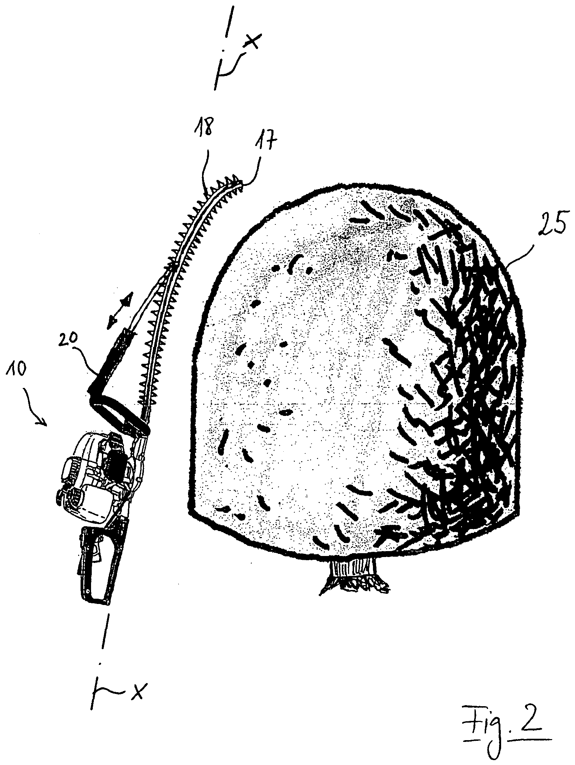

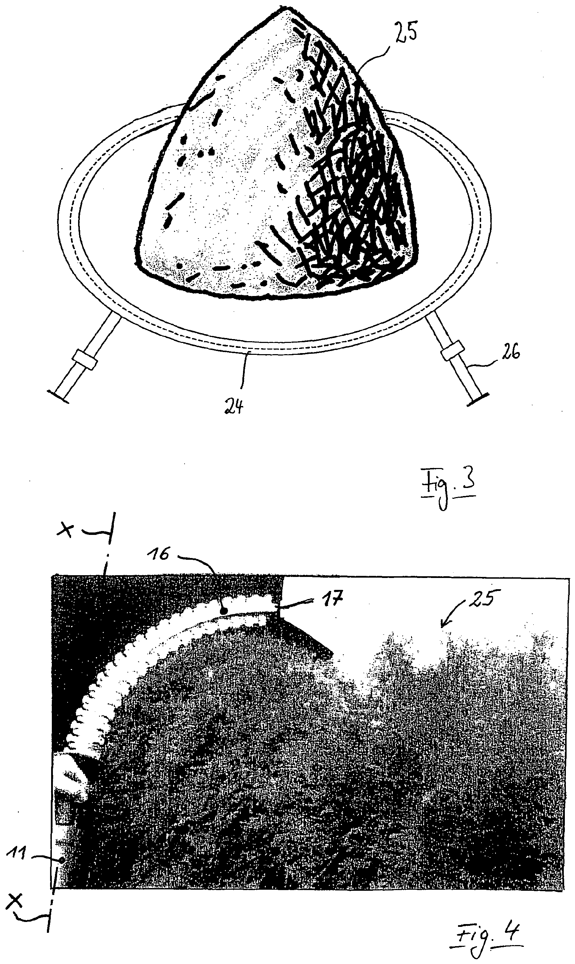

Fig. 1 zeigt eine Ausführungsform eines Schneidgeräts 10 in Form einer Heckenschere. Diese weist ein Gehäuse 11 auf, in dem der Antrieb mit Startervorrichtung und das Getriebe 12 untergebracht sind. Die Heckenschere 10 weist einen ersten Handgriff 13 auf, in dem auch der Gashebel 14 sowie ein Starterknopf 15 angeordnet sind. Heckenschere verfügt ferner über einen aus dem Gehäuse 11 vorstehenden Messerbalken 16, der eine Messerschiene 17 sowie ein in der Messerschiene verschiebbar geführtes Messer 18 aufweist. Der untere Teil des Handgriffs 13 definiert hierbei zusammen mit dem geradlinigen Messerbalken 16 eine Hauptachse X des Schneidgeräts 10. Die Messerschiene 17 und Messer 18 sind bevorzugt aus einem elastisch verformbaren Material gebildet und können, wie durch den Pfeil A angedeutet, aus einer im Wesentlichen geradlinigen Ausgangsposition gegenüber der Hauptachse X bogenförmig gekrümmt oder verformt werden (vgl. Fig. 2 und 4). Um diese Verformung des Schwerts bzw. der Messerschiene 17 und des Messers 18 durchführen zu können, weist die Heckenschere bevorzugt einen Aktuator 19 auf. Dieser ist im Ausführungsbeispiel der Fig. 1 als Spindeltrieb ausgeführt und weist zur Verstellung eine Gewindehülse 20 auf, die fest mit einem ebenfalls am Gehäuse 11 angeordneten zweiten Handgriff 21 verbunden ist. In dieser Gewindehülse 20 befindet sich eine Gewindestange 22, die durch Drehung aus der Gewindehülse 20 heraus bewegt werden kann. Die Gewindestange 22 ist an der Messerschiene 17 oberhalb des Messers 18 angelenkt. Die Messerschiene 17 verfügt hierzu über eine Öse 27, die zentral auf der Messerschiene 17 befestigt, beispielsweise angeschweißt oder aufgelötet ist. Durch die Längenvariation der Gewindestange 22, d. h. durch Herausdrehen der Gewindestange 22 aus der Gewindehülse 20 wird die Messerschiene 17 (gegenüber der normalen Arbeitsposition nach unten gebogen) und darüber vermittelt das Messer 18 mit hoher Kraft beaufschlagt und verformt.

Diese Verformung der Messerschiene 17 und des Messers 18 ist hier aufgrund der Bildung dieser beiden Bestandteile aus einem elastisch verformbaren Material reversibel, kann aber auch bleibend sein. An der Gewindestange 22 ist ein Anschlag angeordnet, bis zu dem diese maximal aus der Gewindehülse 20 heraus drehbar ist. Dieses Maß für die Verlängerung der Gewindestange stellt gleichzeitig den maximalen Wert für die Verformung der Messerschiene 17 und des Messers 18 dar. Die bogenlinienförmige Verformung der Messerschiene 17 und des Messers 18 findet statt, da das gehäuseseitige Ende 23 der Messerschiene 17 fest im Gehäuse 11 bzw. Getriebe 12 angeordnet ist. Hier ist der Aktuator 19 so angeordnet, dass bei normaler Arbeitsposition, die Wölbung in Vertikalrichtung nach unten hin erfolgt (Pfeil A), also die Krümmung quer zur Bewegungsebene der Messer 18 ausgerichtet ist. Wenn der Anlenkpunkt der Gewindehülse 20 vom oberen Bereich des Handgriffs 21 auf die Seite verlegt würde, kann die Messerschiene 17 auch in Horizontalrichtung seitlich (in der Bewegungsebene der Messer 18) gewölbt werden.

Fig. 2 zeigt eine einen Formschnitt aufweisende Pflanze 25, die mit dem erfindungsgemäßen Schneidgerät in Form einer Heckenschere einen Pflegeschnitt erhalten soll. Bei der Verwendung herkömmlicher Heckenscheren, die freihändig geführt werde, muss der Bediener der Heckenschere spezielle Kenntnisse aufweisen, um hier eine gleichmäßige, bogenförmige Schnittführung sicherzustellen. Bei der in Fig. 2 dargestellten Verwendung der erfindungsgemäßen Heckenschere 10 wird die Messerschiene 17 und das darin geführte Messer 18 mit dem die Führungsschiene 18 und das Gehäuse 11 verbindenden Aktuator 19 verformt und hierbei die im Formschnitt zu erzielende geometrische Form der Pflanze 25 eingestellt. Der Bediener der Heckenschere muss somit über keine speziellen Kenntnisse bezüglich des Formschnittes verfügen, um hier eine gleichmäßige Formgebung zu erreichen. Die Heckenschere 10 kann beispielsweise am Boden aufgesetzt werden und um die Pflanze 25 herum gleichmäßig geführt den bogenförmigen Schnitt der Pflanze 25 bewirken. Auf Grund der bogenartigen Verformung der Messerschiene 17 und des darin geführten Messers 18 wird hier eine gleichmäßige Formgebung für die Pflanze 25 erreicht. Nach Abschluss des Formschnitts kann der Aktuator 19 in seine Ausgangsposition zurückgestellt werden, beispielsweise geschraubt oder verschoben, und die Messerschiene 17 und das darin geführte Messer 18 wieder in die geradlinige Ausgangsposition zurückgestellt. Der maximal mit der Verformung erreichbare Radius ist abhängig von der Länge des Messers 18 bzw. der Messerschiene 17. Ebenfalls eine Rolle spielt die Verformbarkeit des Materials, aus dem Messerschiene 17 und Messer 18 gebildet sind. Je elastischer das Material, desto größer die erzielbare Verformung.

Fig_{.} 3 zeigt eine hier nicht beanspruchte Führungsvorrichtung für das Schneidgerät, insbesondere eine Heckenschere 10. Die Führungsvorrichtung weist eine Führungsschiene 24 auf, in die die Heckenschere 10 eingesetzt werden kann. Die Führungsschiene 24 ist im Ausführungsbeispiel als Ringprofil ausgeführt, das über die Pflanze 25 gestülpt wurde und diese konzentrisch umschließt. Die Pflanze 25 verfügt im Ausführungsbeispiel der Fig. 3 ebenfalls bereits über einen Formschnitt, die Heckenschere 10 wird hier für einen Pflegeschnitt verwendet. Hierbei empfiehlt es sich, dass der Pflegeschnitt stets den Winkel der einmal vorgesehenen Formgebung nachzeichnet. Dies kann durch die entsprechende reproduzierbare Verformung von Messerschiene 17 und Messer 18 erreicht werden. Im Ausführungsbeispiel der Fig. 3 wird somit die Messerschiene 17 und das Messer 18 wie durch die Formgebung der Pflanze 25 vorgegeben verformt, die so voreingestellte Heckenschere 10 dann in die Führungsschiene 24 eingesetzt und die angetriebene Heckenschere dann in der Führungsschiene 24 um die Pflanze 25 herum bewegt.

Durch die Verwendung der Führungsvorrichtung kann auf einfache und schnelle Art und Weise die Formgebung bzw. ein Pflegeschnitt einer bereits einen Formschnitt aufweisenden Pflanze 25 durchgeführt werden. Hierzu bedarf es keiner besonderen Kenntnisse, da die Heckenschere 10 einfach in die im Ausführungsbeispiel der Fig. 3 als Ringprofil ausgeführte Führungsschiene 24 eingesetzt wird, um danach um die Pflanze 25 herum bewegt zu werden und dabei deren Schnitt durchzuführen. Die geometrische Form der Pflanze 25 wird durch die Verformung der Messerschiene 17 und des darin geführten Messers 18 erreicht, bzw. wird die durch die Form der Pflanze 25 vorgegebene Verformung an Messerschiene 17 und Messer 18 eingestellt.

Diese Halterung, die nach Art eines Wagens ausgebildet werden kann, gewährleistet eine besonders präzise Anordnung der Heckenschere 10 und einen dadurch erreichbaren präzisen Schnitt der Pflanze 25. Die Führungsschiene 24 verfügt im Ausführungsbeispiel der Fig. 3 zusätzlich über Beine 26. Über diese kann eine Höhenverstellung der Führungsschiene 24 durchgeführt werden. Es wird somit möglich auch größere Pflanzen 25 und höhergelegene Pflanzenteile mit der Heckenschere 10 zu beschneiden. Auf Grund der einstellbaren Länge der Beine 26 kann auch eine bereichsweise Beschneidung größerer Pflanzen 25 durchgeführt werden. Hierzu wird zunächst die Führungsschiene 24 auf eine erste Ebene an der Pflanze 25 eingestellt, und nach Einsetzen der Heckenschere 10 ein Beschneiden der Pflanze 25 durchgeführt. Nachdem die erste Ebene beschnitten wurde, wird eine Verstellung der Beine 26 durchgeführt und die Führungsschiene 24 somit auf eine weitere Ebene an der Pflanze 25 verschoben. Hiernach erfolgt wieder das Einsetzen oder Aufsetzen der Heckenschere 10 und das Beschneiden der zweiten Ebene der Pflanze 25. Weist die Pflanze 25 eine kuppelartige Ausführung auf, so kann, um die Formgebung, den Formschnitt oder den Pflegeschnitt abzuschließen, nach Verschiebung der Führungsschiene 24 auf eine letzte, höchste Ebene eine Verformung der Messerschiene 17 und des Messers 18 anhand der Form der Pflanze 25 erfolgen, und somit eine präziser und geometrisch korrekter Schnitt auch des gewölbten oder geschwungenen Teils der Pflanze 25 durchgeführt werden.

In Fig. 4 ist zur Verdeutlichung eine Fotographie einer Heckenschere beim Zuschneiden einer Heckenoberkante gezeigt. In der linken, unteren Ecke ist das Gehäuse 11 erkennbar, das die Hauptachse X definiert. Die links erkennbare Hand gibt die übliche Stellung beim Zuscheiden von Hecken bzw. Pflanzen 25 vor. Nunmehr ist jedoch der Messerbalken 16 mit der Messerschiene 17 nicht geradlinig, sondern in Art eines Krummsäbels seitlich gebogen. Dadurch kann eine optimale Anpassung an die gewünschte Rundform der Heckenoberkante erfolgen. Der jeweilige Schneidradius lässt sich zudem durch Schrägstellen oder Kippen des Schneidgeräts 10 um seine Hauptachse X noch variieren.

Das erfindungsgemäße Schneidgerät 10, insbesondere Heckenschere und die zugehörige Verwendung erlauben somit die Formgebung bzw. den Pflegeschnitt einer einen Formschnitt aufweisenden Pflanze 25 auf besonders einfache Art und Weise. Der Formschnitt kann präzise und besonders schnell durchgeführt werden und verlangt keine speziellen Vorkenntnisse durch den Bediener der Heckenschere.

### Bezugszeichenliste

| | | | |
|---|---|---|---|
| 10 = | Schneidgerät | 19 = | Aktuator |
| 11 = | Gehäuse | 20 = | Gewindehülse |
| 12 = | Getriebe | 21 = | zweiter Handgriff |
| 13 = | erster Handgriff | 22 = | Gewindestange |
| 14 = | Gashebel | 23 = | Ende |
| 15 = | Starterknopf | 24 = | Führungsschiene |
| 16 = | Messerbalken | 25 = | Pflanze |
| 17 = | Messerschiene | 26 = | Beine |
| 18 = | Messer | 27 = | Öse |

## Patentansprüche

1. Schneidgerät (10) mit einem aus einem Gehäuse (11) vorstehenden Messerbalken (16) mit einer Messerschiene (17) und mit mindestens einem an oder in der Messerschiene (17) verschiebbar geführten Messer (18), wobei die Messerschiene (17) und das Messer (18) gegenüber einer Hauptachse (X) des Schneidgeräts (10) in Art eines Krummsäbels in seitlicher Richtung bogenförmig gekrümmt sind,
**dadurch gekennzeichnet, dass**
die Krümmung der Messerschiene (17) und des Messers (18) verstellbar ist.

2. Schneidgerät (10) nach Anspruch 1, **dadurch gekennzeichnet, dass** wenigstens eine Verstellvorrichtung für die Krümmung vorgesehen ist.

3. Schneidgerät (10) nach einem der vorhergehenden Ansprüche,
**dadurch gekennzeichnet, dass**
der Messerbalken (16) schwenkbar im Gehäuse (11) angelenkt ist.

4. Schneidgerät (10) nach einem der vorhergehenden Ansprüche,
**dadurch gekennzeichnet, dass**
die Messerschiene (17) durch quer zur Längserstreckung eingebrachte Unterbrechungen in Abschnitte unterteilt ist und in den Unterbrechungen Verbindungsmittel für die Abschnitte vorgesehen sind.

5. Schneidgerät (10) nach Anspruch 4, **dadurch gekennzeichnet, dass** die Verbindungsmittel für die Abschnitte als Stellglieder für die Verformung der Messerschiene (17) als Piezoelemente ausgebildet sind.

6. Verwendung eines Schneidgerätes nach einem der Ansprüche 1 bis 5, **dadurch gekennzeichnet, dass** der jeweilige Schneidradius des in Art eines Krummsäbels gebogenen Schneidgerätes (10) durch Kippen um die Hauptachse (X) variierbar ist.

## Claims

1. Cutting device (10) with a knife bar (16) projecting from a housing (11) and having a knife rail (17) with at least one blade (18), being slideably guided on or in the knife rail (17), wherein the knife rail (17) and the blade (18) are curved in an arc in a lateral direction with respect to a main axis (X) of the cutting device (10) in the manner of a scimitar,
**characterized in that**
the curvature of the knife rail (17) and of the blade (18) is adjustable,

2. Cutting device (10) according to claim 1, **characterized in that**
at least one adjusting device is provided for the deformation.

3. Cutting device (10) according to any one of the preceding claims,
**characterized in that**
the knife bar (16) is pivotally hinged in the housing (11).

4. Cutting device (10) according to any one of the preceding claims,
**characterized in that**
the knife rail (17) is subdivided in sections by transverse interruptions along the longitudinal extension and the sections are provided with connecting means in the interruptions.

5. Cutting device (10) according to claim 4, **characterized in that**
the connecting means for the sections are formed as actuators for the deformation of the knife rail (17) in the form of piezo elements.

6. Use of a cutting device according to one of the claims 1 to 5, **characterized in that**
the appropriate cutting radius of the cutting device (10) curved in the form of a scimitar is variable by tilting around the main axis (X).

## Revendications

1. Appareil de coupe (10) comprenant une barre (16) porte-lame dépassant au-delà d'un boîtier (11), une glissière (17) porte-lame, et au moins une lame (18) guidée à coulissement sur ou dans la glissière (17) porte-lame, ladite glissière (17) porte-lame et ladite lame (18) présentant une courbure en arc de cercle dans la direction latérale, vis-à-vis d'un axe principal (X) dudit appareil de coupe (10), à la manière d'un sabre courbe,
**caractérisé par le fait que**
la courbure de la glissière (17) porte-lame, et de la lame (18), peut être réglée.

2. Appareil de coupe (10) selon la revendication 1,
**caractérisé par le fait**
**qu'**au moins un dispositif est prévu pour le réglage de la courbure.

3. Appareil de coupe (10) selon l'une des revendications précédentes,
**caractérisé par le fait que**
la barre (16) porte-lame est articulée dans le boîtier (11), avec faculté de pivotement.

4. Appareil de coupe (10) selon l'une des revendications précédentes,
**caractérisé par le fait que**
la glissière (17) porte-lame est scindée en des tronçons, suite à des discontinuités ménagées transversalement par rapport à l'étendue longitudinale, des moyens de liaison, affectés auxdits tronçons, étant prévus dans lesdites discontinuité,

5. Appareil de coupe (10) selon la revendication 4,
**caractérisé par le fait que**
les moyens de liaison affectés aux tronçons sont réalisés sous la forme d'élément piézoélectriques, en tant qu'organes de réglage de la réformation de la glissière (17) porte-lame,

6. Utilisation d'un appareil de coupe conforme à l'une des revendications 1 à
5, **caractérisée par le fait que**
le rayon de sectionnement considéré de l'appareil de coupe (10), cintré à la manière d'un sabre courbe, peut être modifié par basculement autour de l'axe principal (X).
